# EUROPÄISCHE PATENTSCHRIFT

(11) **EP 0 916 866 B1**
(45) Veröffentlichungstag und Bekanntmachung des Hinweises auf die Patenterteilung: **24.09.2003**
(21) Anmeldenummer: 98120864.8
(22) Anmeldetag: 03.11.1998
(51) Int. Cl.: F16D 65/16

(54) **Elektrisch betätigbare Bremse für ein Kraftfahrzeug**
Electrically actuated brake for an automobile
Frein à actionnement électrique pour véhicule automobile

(30) Priorität: 14.11.1997 DE 19750420
(43) Veröffentlichungstag der Anmeldung: 19.05.1999
(60) Teilanmeldung: 02025289.6
(73) Patentinhaber: Bayerische Motoren Werke Aktiengesellschaft, 80788 München (DE)
(72) Erfinder: Pitzer, Franz, 85716 Unterschleissheim (DE)

(56) Entgegenhaltungen:
- EP-A- 0 788 957
- DE-A- 19 620 344
- US-A- 3 348 638
- US-A- 4 542 809
- US-A- 5 549 183
- US-A- 5 785 157

## Beschreibung

Die Erfindung bezieht sich auf eine elektrisch betätigbare Scheibenbremse für ein Kraftfahrzeug mit einem am Bremssattel vorgesehenen Elektromotor als rotatorischem Antrieb zur Erzeugung der Bremskraft sowie mit einer Feststelleinrichtung, und geht aus von der EP 0 788 957 A2. Dabei fungiert die Feststelleinrichtung als eine mechanische Sperreinrichtung, die nach vorangegangenem Spannen der Bremse, die in erster Linie als Betriebsbremse fungiert, den elektrischen Antrieb verriegelt und damit die Bremswirkung im Sinn einer Feststellbremse für das stehende Fahrzeug aufrechterhält.

Beim bekannten Stand der Technik gemäß der genannten Schrift ist die Feststelleinrichtung in Form einer elektromagnetischen Reibungsrutschkupplung ausgebildet, wobei ein sog. Reibkopf unter Federkraft gegen eine Spindelmutter des spannenden Antriebs der Bremse gepresst wird. Gelöst werden kann diese bekannte Feststelleinrichtung entgegen der Federkraft mittels eines Elektromagneten. Um bei diesem bekannten Stand der Technik eine ausreichende Reibungskraft zum sicheren Festhalten eines Kraftfahrzeugs zu erzielen, ist eine relativ hohe Federkraft erforderlich, was wiederum einen starken und insbesondere zuverlässigen Elektromagneten erfordert, um die Feststelleinrichtung auch wieder lösen zu können.

Eine demgegenüber verbesserte elektrisch betätigbare Kraftfahrzeug-Bremse nach dem Oberbegriff des Anspruchs 1 aufzuzeigen, die sowohl eine sichere Feststellfunktion gewährleistet als auch zuverlässig und sicher lösbar ist, ist Aufgabe der vorliegenden Erfindung.

Die Lösung dieser Aufgabe ist dadurch gekennzeichnet, dass die Feststelleinrichtung durch ein drehfest mit dem Antrieb (zur Erzeugung der Bremskraft) verbundenes Klinkenrad mit wenigstens einer in das Klinkenrad einrückbaren Sperrklinke gebildet und derart ausgelegt ist, dass durch ein vom Antrieb initiiertes Verdrehen des Klinkenrads die im Klinkenrad verrastete Sperrklinke aus ihrer Verrastung gedrückt werden kann. Weitere Ausgestaltungen und Vorteile der Erfindung gehen aus den Unteransprüchen hervor.

Der erfindungsgemäße einfache mechanische Aufbau mit einem Klinkenrad und (zumindest) einer Sperrklinke gewährleistet eine sichere Funktion und verhindert das Nachlassen der Feststellwirkung über der Zeit. Die Verzahnung zwischen der Sperrklinke und dem Klinkenrad ist dabei derart ausgelet, dass die Feststellbremse auch ohne Betätigung des eigenständigen Antriebs zum Ausrücken der Sperrklinke aus dem Klinkenrad gelöst werden kann. Eine solche Auslegung stellt nämlich einen erheblichen Sicherheitsgewinn dar, indem dadurch bei einer unbeabsichtigten Betätigung der Feststelleinrichtung während der Fahrt des Kraftfahrzeugs - d.h. dass während der Fahrt versucht wird, die Sperrklinke in das Klinkenrad einrasten zu lassen - die Betriebsbremse gegenüber der Feststellbremse dominiert.

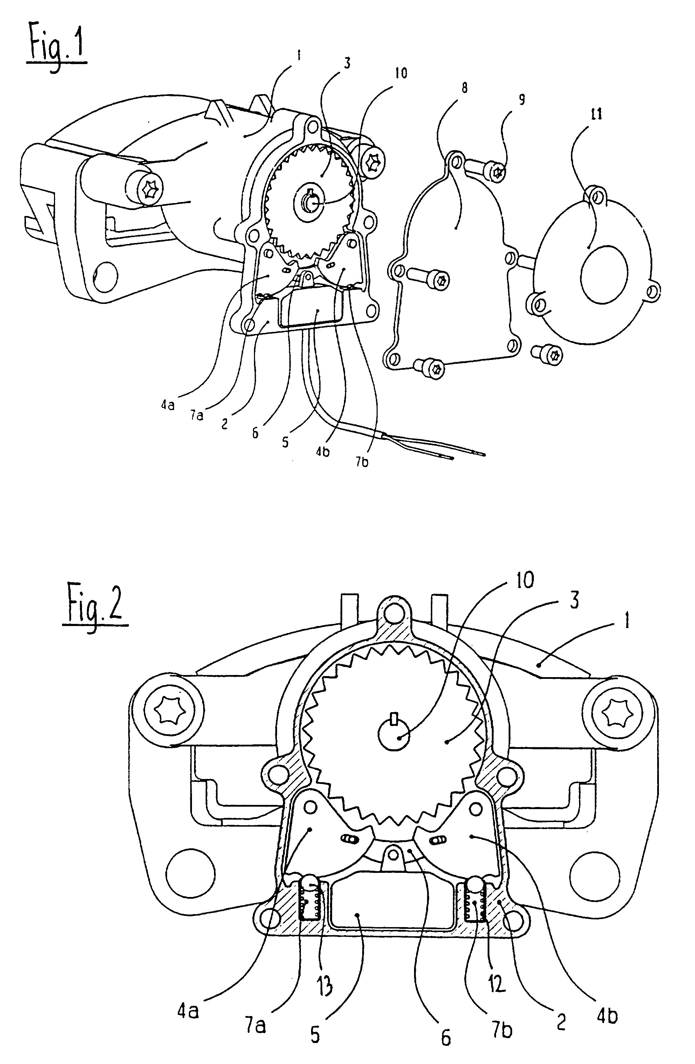

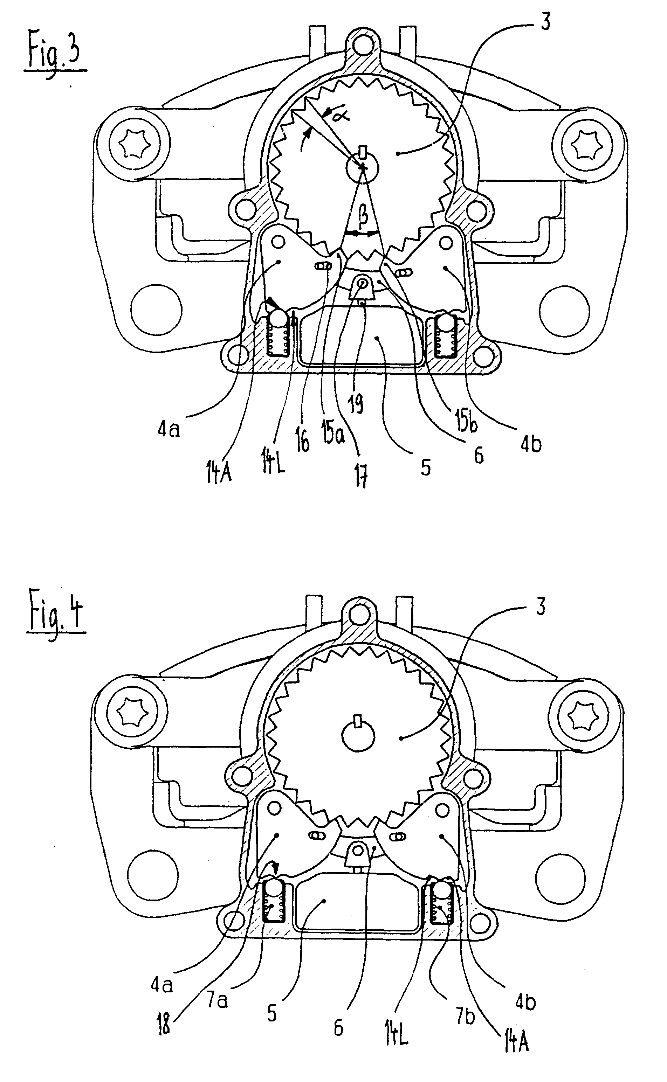

Ein mögliches Ausführungsbeispiel der Erfindung ist in der Zeichnung dargestellt und wird nachfolgend näher erläutert. Dabei zeigt **Figur 1** einen Bremssattel mit einer erfindungsgemäßen Feststelleinrichtung in perspektivischer Ansicht, **Figur 2** eine Draufsicht auf die erfindungsgemäße Feststelleinrichtung bei gelöster Feststellbremse und die **Figuren 3 und 4** der Figur 2 entsprechende Darstellungen der aktivierten Feststelleinrichtung.

**Figur 1** zeigt einen "elektromechanischen Bremssattel" 1, der als Faustsattel für eine Scheibenbremse ausgeführt ist. Im Inneren des Bremssattels 1 ist ein Elektromotor mit einer Antriebswelle 10 bzw. als Antrieb 10 angeordnet, der bei Strombeaufschlagung eine Rotationsbewegung ausführt, die über ein Getriebe in eine geradlinig verlaufende Zustellbewegung der Bremsbacken umgewandelt wird. Aufgrund des Wirkungsgrades einer derartigen Anordnung ist davon auszugehen, daß bei stromlosem Elektromotor keine (sichere) Selbsthemmung vorliegt, so daß sich die Bremse ganz oder teilweise selbsttätig löst.

An dem den Bremsbacken abgewandten Endabschnitt des Bremssattels 1 ist eine Feststelleinrichtung angeordnet. Hierzu weist der Bremssattel 1 eine Gehäuseöffnung auf, an die das Gehäuse 2 der Feststelleinrichtung angeflanscht ist. Diese Anordnung zeichnet sich durch gute Zugänglichkeit aus. Das Gehäuse 2 ist durch einen Deckel 8 über Schrauben 9 verschließbar. Alternativ kann bei einer Ausführung des Bremssattels 1 ohne Feststelleinrichtung die Gehäuseöffnung mit einem Blinddeckel 11 verschlossen werden.

Zur Anbindung der Feststelleinrichtung ist die Antriebswelle 10 des Elektromotors so weit aus dem Bremssattel 1 herausgeführt, daß sie ein Klinkenrad 3 verdrehfest aufnehmen kann. Im unteren Teil des Gehäuses 2 sind zwei schwenkbar gelagerte Sperrklinken 4a und 4b angeordnet, die über einen Elektromagneten 5 sowie eine Wippe 6 verstellbar sind. Federelemente 7a und 7b, die in den Figuren 2 bis 4 näher dargestellt sind, bewirken eine Lagefixierung der Sperrklinken 4a und 4b.

**Figur 2** zeigt den elektromechanischen Bremssattel bei gelöster Feststelleinrichtung. Beide Sperrklinken 4a und 4b sind vom Klinkenrad 3 abgehoben, wobei diese ausgerückte Position durch Einrasten der Federelemente 7a und 7b definiert gehalten wird. Die Federelemente 7a und 7b weisen jeweils eine Schraubenfeder 12 auf, die in eine Bohrung des Gehäuses 2 eingesetzt ist. Über die Schraubenfedern 12 werden Kugeln 13 in entsprechend geformte Ausnehmungen 14A und 14L der Sperrklinken 4a und 4b gedrückt.

Bei Bestromung des Elektromagneten 5 bewegt der Hubzapfen 19 die Wippe 6 auf das Klinkenrad 3 zu und verschwenkt hierbei die beiden Sperrklinken 4a und 4b (vgl. **Figuren 3 und 4**). Die Längsschlitze 16 sowie die Kipplagerung 17 der Wippe 6 ermöglichen einen unterschiedlichen Verschwenkwinkel der beiden Sperrklinken 4a und 4b: So greift gemäß **Figur 3** der Rastzahn 15a der Sperrklinke 4a vollständig in die Sperrverzahnung des Klinkenrades 3 ein, während es im Fall der Sperrklinke 4b zu einer Kopf-Kopf-Stellung von Rastzahn 15b und Sperrverzahnung des Klinkenrades 3 kommt. Bei der in **Figur 3** dargestellten Konstellation rastet die Kugel 13 des Federelementes 7a in die Ausnehmung 14A der Sperrklinke 4a ein und arretiert damit die Sperrklinke 4a in ihrer Feststellposition. Zum Betätigen der Feststelleinrichtung ist nur eine einmalige, kurzzeitige Betätigung des Elektromagneten 5 notwendig. Der Fahrer des Kraftfahrzeuges kann die Feststelleinrichtung aktiv durch ein entsprechendes tastenartiges Bedienelement ansteuern. Zusätzlich kann die Feststellung bei Vorliegen bestimmter, vorgegebener Bedingungen des Kraftfahrzeuges selbsttätig erfolgen (Ampelstop-Funktion, etc.).

Die Sperrklinken 4a und 4b sind so angeordnet, daß ihre Rastzähne 15a bzw. 15b einen Winkel β einschließen, der das (n + 0,5)fache des Winkels α der Zahnteilung der Sperrverzahnung des Klinkenrades 2 beträgt. Im dargestellten Ausführungsbeispiel hat β den Wert 2,5 α. Durch diese definierte Anordnung der Sperrklinken 4a und 4b wird erreicht, daß - unabhängig von der Stellung des Klinkenrades 3 - der Rastzahn 15a bzw. 15b wenigstens einer Sperrklinke 4a oder 4b bei Betätigung des Elektromagnetes 5 so weit in die Sperrverzahnung des Klinkenrades 3 einrückt, daß das zugehörige Federelement 7a bzw. 7b sicher in die Ausnehmung 14A einrastet, wie in **Figur 3** dargestellt.

**Figur 4** stellt den Grenzfall einer Klinkenradstellung dar, bei der keine der beiden Sperrklinken 4a und 4b vollständig in die Sperrverzahnung des Klinkenrades 3 einrastet. Für diesen Fall greifen die Rastzähne 15a und 15b beider Sperrklinken 4a und 4b jedoch so weit in die Sperrverzahnung des Klinkenrades 3 ein, daß die Kugeln 16 beider Federelemente 7a und 7b jeweils über den "Totpunkt" 18 zwischen den Ausnehmungen 14A und 14L der Sperrklinken 4a und 4b in Richtung der Ausnehmungen 14A hinausbewegt sind und durch diese Übertotpunktlage eine sichere Feststellung der Bremse erreicht wird.

Zum Lösen der Feststellbremse kann durch umgepolte Bestromung des Elektromagneten 5 dessen Hubzapfen 19 eingezogen werden, so daß über die Wippe 6 die Sperrklinken 4a und 4b aus der Sperrverzahnung herausgeschwenkt werden.

Ein Lösen der Bremse bzw. der Feststelleinrichtung kann aber auch alleine durch Betätigung des Antriebs 10, d.h. des Elektromotors, gelöst werden, indem das vom Antrieb 10 in Drehung versetzte Klinkenrad 3 die Sperrklinken 4a und 4b aus der Verrastung drückt. Dabei schnappen die Sperrklinken 4a und 4b nach Überschreiten des Totpunktes 18 zwischen den Ausnehmungen 14A und 14L vollständig in ihre Löseposition 14L.

Diese Möglichkeit des Lösens der Feststellbremse ist aufgrund einer geeigneten Geometrie der Verzahnung zwischen den Rastzähnen 15a bzw. 15b und der Sperrverzahnung des Klinkenrades 3 realisiert und insbesondere von der Wahl des Eingriffswinkels zwischen den Verzahnungspartnern abhängig. Zu berücksichtigen ist dabei ferner die Federkraft der Federelemente 7a bzw. 7b, die Art der Verrastung zwischen Federelement 7a, 7b in der Ausnehmung 14A (bspw. wie dargestellt, System Kugel-Kugelpfanne) sowie die Reibverhältnissen in der gesamten Anordnung.

Das Lösen der Feststellbremse über die Betriebsbremse bzw. über deren Antrieb 10 kann einerseits dann angewandt werden, wenn bei festgestellter Bremse der Elektromagnet 5 ausfällt. Durch Betätigung der Betriebsbremse (Anziehen oder Lösen) wird somit der Feststellmechanismus gelöst und die Weiterfahrt des Fahrzeuges ermöglicht. Andererseits ist durch diese Möglichkeit des Lösens ein "integriertes Sicherheitskonzept" gegeben, so daß bei einer ungewollten Betätigung der Feststelleinrichtung während der Fahrt des Kraftfahrzeuges die Betriebsbremse gegenüber der Feststellbremse dominiert. Durch den Übertotpunktmechanismus zur Lagefixierung der Sperrklinken 4a und 4b werden die die Sperrklinken 4a und 4b vollständig vom Klinkenrad 3 abgehoben, indem die Kugeln 13 in die Ausnehmungen 14L einschnappen, so daß keinerlei störende Rattergeräusche beim sich anschließenden Gebrauch der Betriebsbremse entstehen.

Die erfindungsgemäße Feststelleinrichtung besteht aus wenigen, einfach aufgebauten mechanischen Teilen und einem Elektromagneten. Durch das integrierte Sicherheitskonzept kann auf eine zusätzliche Sensorik und Verstelleinrichtung zur Erkennung bzw. Vermeidung unzulässiger Betriebszustände verzichtet werden.

## Patentansprüche

1. Elektrisch betätigbare Scheibenbremse für ein Kraftfahrzeug Scheibenbremse, mit einem am Bremssattel (1) der Scheibenbremse vorgesehenen Elektromotor als rotatorischem Antrieb (10) zur Erzeugung der Bremskraft sowie mit einer Feststelleinrichtung,
**dadurch gekennzeichnet, dass** die Feststelleinrichtung durch ein drehfest mit dem Antrieb (10) verbundenes Klinkenrad (3) mit wenigstens einer in das Klinkenrad (3) einrückbaren Sperrklinke (4a, 4b) gebildet und derart ausgelegt ist, dass durch ein vom Antrieb (10) initiiertes Verdrehen des Klinkenrads (3) die im Klinkenrad (3) verrastete Sperrklinke (4a, 4b) aus ihrer Verrastung gedrückt werden kann.

2. Elektrisch betätigbare Scheibenbremse nach Anspruch 1,
**gekennzeichnet durch** eine Einrichtung zur Lagefixierung der Sperrklinke (4a, 4b), die die beiden Positionen "Sperrklinke (4a, 4b) vollständig in das Klinkenrad (3) eingerückt" und "Sperrklinke (4a, 4b) vollständig vom Klinkenrad (3) abgehoben" erzeugt.

3. Elektrisch betätigbare Scheibenbremse Anspruch 2,
**dadurch gekennzeichnet, dass** die Einrichtung zur Lagefixierung der Sperrklinke (4a, 4b) aus zwei Ausnehmungen (14A, 14L) in der Sperrklinke (4a, 4b) und einem in die Ausnehmungen (14A, 14L) eingreifenden, federbelasteten Element (13) besteht.

4. Elektrisch betätigbare Scheibenbremse nach einem der vorangegangene Ansprüche,
**dadurch gekennzeichnet, dass** die Sperrklinke (4a, 4b) über einen Elektromagneten (5) verlagerbar ist.

5. Elektrisch betätigbare Scheibenbremse einem der vorgenannten Ansprüche,
**gekennzeichnet durch** zwei verschwenkbare, symmetrisch zum Klinkenrad (3) angeordnete Sperrklinken (4a, 4b), die gemeinsam über einen motorischen Antrieb (5) verlagerbar sind.

6. Elektrisch betätigbare Scheibenbreinse nach Anspruch 5,
**dadurch gekennzeichnet, daß** die Rastzähne (15a, 15b) der Sperrklinken (4a, 4b) in Bezug auf den Mittelpunkt des Klinkenrades (3) einen Winkel (β) einschließen, der ein (n + 0,5)faches des Winkels (α) der Zahnteilung des Klinkenrades (3) beträgt, mit n = 1, 2, 3 ....

## Claims

1. An electrically actuatable disc brake for a motor vehicle comprising a rotary drive (10) in the form of an electric motor on the disc brake caliper (1) for generating the brake force and also comprising an immobilising device, **characterised in that** the immobilising device comprises a ratchet wheel (3) co-rotatably connected to the drive (10) and with at least one pawl (4a, 4b) for engaging in the ratchet wheel (3) and is designed so that the pawl (4a, 4b) engaging in the ratchet wheel (3) can be pushed out of engagement by rotation of the ratchet wheel (3) initiated by the drive (10).

2. An electric disc brake according to claim 1, **characterised by** a means for fixing the ratchet (4a, 4b) in position by generating two positions: "pawl (4a, 4b) completely engaged in the ratchet wheel (3)" and "pawl (4a, 4b) completely lifted off the ratchet wheel (3)".

3. An electric disc brake according to claim 2, **characterised in that** the means for fixing the position of the ratchet wheel (4a, 4b) comprises two recesses (14A, 14L) in the ratchet wheel (4a, 4b) and a spring-loaded element (13) engaging in the recesses (14A, 14L).

4. An electric disc brake according to any of the preceding claims, **characterised in that** the pawl (4a, 4b) is movable by an electromagnet (5).

5. An electric disc brake according to any of the preceding claims, **characterised by** two pivotable pawls (4a, 4b) disposed symmetrically with respect to the ratchet wheel (3) and movable together by a motor drive (5).

6. An electric disc brake according to claim 5, **characterised in that** the teeth (15a, 15b) on the pawls (4a, 4b), with respect to the centre of the ratchet wheel (3), include an angle (β) which is (n+0.5) times the angle (α) of the tooth spacing on the ratchet wheel (3), with n = 1, 2, 3, ...

## Revendications

1. Frein à disque à actionnement électrique pour un véhicule automobile, composé d'un électromoteur sur l'étrier (1) utilisé comme entraînement (10) rotatoire pour générer la force de freinage ainsi que d'un dispositif d'arrêt,
**caractérisé en ce que**
le dispositif d'arrêt est formé par une roue à cliquet (3) reliée à l'entraînement (10) sans rotation possible avec au moins un cliquet d'arrêt (4a,4b) pouvant être engrené dans la roue à cliquet (3), et disposé de manière à ce qu'une rotation de la roue à cliquet initiée par l'entraînement (10) permette de dégager de son engagement le cliquet d'arrêt (4a,4b) enclenché dans la roue à cliquet (3).

2. Frein à disque à actionnement électrique selon la revendication 1,
**caractérisé par**
un dispositif permettant de fixer la position du cliquet d'arrêt (4a,4b) qui crée les deux positions «Cliquet d'arrêt (4a,4b) complètement engagé dans la roue à cliquet (3)» et «Cliquet d'arrêt (4a,4b) complètement sorti de la roue à cliquet (3)».

3. Frein à disque à actionnement électrique selon la revendication 2,
**caractérisé en ce que**
le dispositif permettant de fixer la position du cliquet d'arrêt (4a,4b) se compose de deux creux (14A, 14L) dans le cliquet d'arrêt (4a,4b) et d'un élément (13) chargé par ressort en prise dans les creux (14A, 14L).

4. Frein à disque à actionnement électrique selon l'une des revendications précédentes,
**caractérisé en ce que**
le cliquet d'arrêt (4a,4b) peut être déplacé via un électroaimant (5).

5. Frein à disque à actionnement électrique selon l'une des revendications précédentes,
**caractérisé par**
deux cliquets d'arrêt (4a,4b) disposés de façon symétrique à la roue à cliquet (3), pouvant être balayés et déplacés ensemble via un entraînement motorisé (5).

6. Frein à disque à actionnement électrique selon la revendication 5,
**caractérisé en ce que**
les dents d'arrêt (15a,15b) des cliquets d'arrêt (4a,4b) forment un angle (β) par rapport au centre de la roue à cliquet (3) de (n + 0,5) fois l'angle (a) de l'écart des dents de l'engrenage d'arrêt de la roue à cliquet (3), avec n = 1, 2, 3...
